# FASCICULE DE BREVET EUROPEEN

(11) **EP 2 873 108 B1**
(45) Date de publication et mention de la délivrance du brevet: **08.04.2020**
(21) Numéro de dépôt: 13734796.9
(22) Date de dépôt: 10.07.2013
(51) Int. Cl.: H01M 8/04089, H01M 8/04223

(54) **DISPOSITIF D'ALIMENTATION D'AU MOINS UNE PILE À COMBUSTIBLE**
VORRICHTUNG ZUR VERSORGUNG VON MINDESTENS EINER BRENNSTOFFZELLE
DEVICE FOR SUPPLYING AT LEAST ONE FUEL CELL

(30) Priorité: 10.07.2012 FR 1256639
(43) Date de publication de la demande: 20.05.2015
(73) Titulaire: Areva Stockage d'Energie, 13547 Aix-en-Provence (FR)
(72) Inventeur: GENESTON, Thierry, F-84300 Cavaillon (FR)
(74) Mandataire: Lavoix
(86) Numéro de dépôt international: PCT/EP2013/064536
(87) Numéro de publication internationale: WO 2014/009395

(56) Documents cités:
- US-A1- 2002 098 396
- US-A1- 2003 175 567
- US-A1- 2004 180 243
- US-A1- 2005 186 454
- US-A1- 2010 028 726

## Description

La présente invention concerne le domaine des piles à combustible, et en particulier un dispositif d'alimentation d'au moins une pile en combustible en combustible et en comburant.

Une pile à combustible permet de générer de l'énergie électrique par une réaction électrochimique d'oxydoréduction entre un combustible, par exemple de l'hydrogène, et un comburant, par exemple de l'oxygène. Les piles à combustibles à membrane échangeuse de protons ou Proton Exchange Membrane Fuel Cells (PEMFC) en anglais, comprennent au moins une cellule électrochimique, chaque cellule électrochimique comprenant une membrane échangeuse de protons et permettant de faire circuler de l'oxygène d'un côté de la membrane et de l'hydrogène de l'autre côté de la membrane pour l'oxydoréduction entre l'hydrogène et l'oxygène au travers de la membrane.

Des piles à combustibles sont utilisées par exemple comme source d'énergie électrique de secours en cas de défaillance d'un réseau électrique, pour l'alimentation de bâtiments ou d'installations sensibles, par exemple les hôpitaux.

Une telle pile à combustible reste inactive pendant de longues périodes et doit être démarrée de manière fiable.

Il est possible de prévoir des dispositifs de stockage d'énergie électrique, tels que des batteries, des capacités ou des supercapacités, ou des dispositifs de stockage d'énergie mécanique, tels que des volants d'inerties ou des sources à air comprimé, pour fournir l'énergie nécessaire au démarrage de la pile à combustible.

Néanmoins, du fait des longues périodes d'inactivité d'une pile à combustible utilisées comme source d'énergie électrique de secours, il est nécessaire de maintenir ces équipements. En outre, ces équipements peuvent eux-mêmes être source de défaillances.

Un des buts de l'invention est de proposer un dispositif d'alimentation d'au moins une pile à combustible permettant le démarrage fiable de la pile à combustible.

A cet effet, l'invention propose un dispositif d'alimentation d'au moins une pile à combustible selon la revendication 1.

Selon d'autres modes de réalisation, le dispositif d'alimentation comprend une ou plusieurs des caractéristiques des revendications 2 à 10 prises isolément ou selon toutes les combinaisons techniquement possibles.

L'invention concerne également un système à pile à combustible comprenant au moins une pile à combustible et un dispositif d'alimentation de la ou chaque pile en combustible en combustible et en comburant tel que défini ci-dessus.

L'invention et ses avantages seront mieux compris à la lecture de la description qui va suivre, données uniquement à titre d'exemple, et faites en référence aux dessins annexés, sur lesquels :
- la figure 1 est une vue schématique d'un système de piles à combustible comprenant un dispositif d'alimentation ;
- les figures 2 à 4 sont des vues analogues à celle de la figure 1 illustrant des systèmes de piles à combustible comprenant des dispositifs d'alimentation selon des variantes.

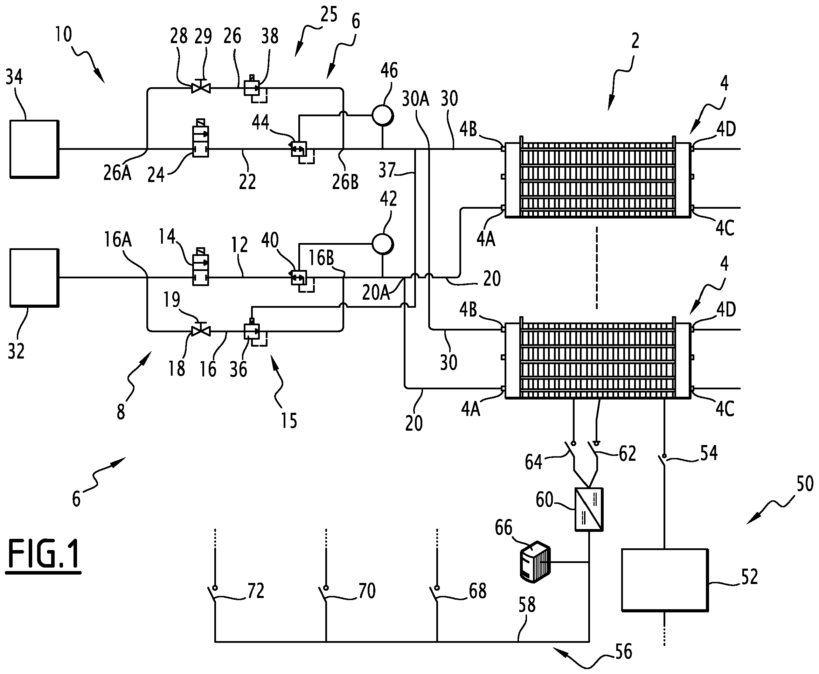

Le système à pile à combustible 2 illustré sur la figure 1 comprend une pluralité de piles à combustible 4 et un dispositif d'alimentation 6 pour alimenter chaque pile à combustible en combustible et en comburant. Seules deux piles à combustible 4 sont représentées sur la Figure 1.

Chaque pile à combustible 4 comprend au moins une cellule électrochimique, et de préférence un empilement de cellules électrochimiques, chaque cellule électrochimique étant configurée pour générer de l'électricité par oxydoréduction d'un combustible et d'un comburant.

Chaque pile à combustible 4 comprend une première entrée 4A et une deuxième entrée 4B, l'une pour l'alimentation en combustible et l'autre pour l'alimentation en comburant. Chaque cellule électrochimique est alimentée en combustible et en comburant à partir de la première entrée 4A et de la deuxième entrée 4B.

Chaque pile à combustible 4 comprend une première sortie 4C et une deuxième sortie 4D, pour l'évacuation des fluides résultants de l'oxydoréduction.

Les piles à combustible 4 sont par exemple des piles à combustible à membrane échangeuse de protons ou Proton Exchange Membrane Fuel Cell (PEMFC) en anglais. Chaque cellule électrochimique comprend une membrane échangeuse de protons, la réaction d'oxydoréduction se faisant par échange de protons aux travers de la membrane entre de l'hydrogène utilisé comme combustible et de l'oxygène utilisé comme comburant.

De préférence, les piles à combustibles sont des piles dihydrogène/dioxygène (H₂/O₂) utilisant du dihydrogène (H₂) comme combustible et du dioxygène (O₂) comme comburant. Il existe des piles à combustible dihydrogène/air utilisant du dihydrogène (H₂) comme combustible et l'oxygène de l'air comme comburant. La réaction d'oxydoréduction génère de l'eau résultant de la combinaison de l'oxygène et de l'hydrogène.

Le dispositif d'alimentation comprend un premier circuit 8 fluidique et un deuxième circuit 10 fluidique, l'un pour l'alimentation des piles à combustible 4 en combustible et l'autre pour l'alimentation des piles à combustible 4 en comburant. Le premier circuit 8 est utilisé pour l'alimentation en combustible et le deuxième circuit 10 pour l'alimentation en comburant, ou l'inverse.

Le premier circuit 8 alimente les premières entrées 4A des piles à combustible 4 et le deuxième circuit 10 alimente les deuxièmes entrées 4B des piles à combustible 4.

Le premier circuit 8 comprend un premier conduit d'alimentation 12 sur lequel est disposée une première électrovanne 14 de commande du débit dans le premier conduit d'alimentation 12, et un premier dispositif de démarrage 15 configuré pour permettre la circulation de fluide dans le premier circuit 8 vers chaque pile à combustible 4 lorsque la commande électrique de la première électrovanne 14 est inopérante,

Le premier dispositif de démarrage 15 comprend un premier conduit de dérivation 16 de la première électrovanne 14, muni d'une première vanne de dérivation 18 de commande du débit dans le premier conduit de dérivation 16.

La première électrovanne 14 est à commande électrique et nécessite une alimentation électrique pour son fonctionnement. Sa commande électrique est inopérante en l'absence d'alimentation électrique. En fonctionnement normal, la commande électrique de la première électrovanne 14 est alimentée en électricité par la ou chaque pile à combustible.

La première vanne de dérivation 18 est à commande manuelle et ne nécessite pas d'alimentation électrique pour son fonctionnement. Elle comprend un premier organe de manoeuvre 19 dont l'actionnement manuel par un opérateur permet de fermer la deuxième vanne de dérivation 18 pour empêcher la circulation de fluide dans le deuxième conduit de dérivation 16 ou d'ouvrir la deuxième vanne de dérivation 18 pour permettre la circulation de fluide dans le deuxième conduit de dérivation 16.

La premier circuit 8 comprend au moins une première branche d'alimentation 20 alimentée par le premier conduit d'alimentation 12, chaque première branche d'alimentation 20 étant reliée à la première entrée 4A d'une pile à combustible 4 respective pour alimenter la pile à combustible 4.

Le premier circuit 8 comprend autant de premières branches d'alimentation 20 que le système à pile à combustible 2 comprend de piles à combustible 4. Les premières entrées 4A des piles à combustible 4 sont alimentées en parallèle par le premier circuit 8.

Le premier conduit de dérivation 16 s'alimente dans le premier conduit d'alimentation 12 en amont de la première électrovanne 14 en un premier point d'alimentation 16A et débouche dans le premier conduit d'alimentation 12 en un premier point de retour 16B en aval de la première électrovanne 14 et en amont de l'embranchement des premières branches 20 sur le premier conduit d'alimentation 12.

Le deuxième circuit 10 comprend un deuxième conduit d'alimentation 22 sur lequel est disposée une deuxième électrovanne 24 de commande du débit dans le deuxième conduit d'alimentation 22, et un deuxième dispositif de démarrage 25 configuré pour permettre la circulation de fluide dans le deuxième circuit 10 vers la ou chaque pile à combustible 4 lorsque la commande électrique de la deuxième électrovanne 24 est inopérante.

Le deuxième dispositif de démarrage 25 comprend un deuxième conduit de dérivation 26 de la deuxième électrovanne 24, muni d'une deuxième vanne de dérivation 28 de commande du débit dans le deuxième conduit de dérivation 26.

La deuxième électrovanne 24 est à commande électrique et nécessite une alimentation électrique pour son fonctionnement. Sa commande électrique est inopérante en l'absence d'alimentation électrique. En fonctionnement normal, la commande électrique de la deuxième électrovanne 24 est alimentée en électricité par la ou chaque pile à combustible.

La deuxième vanne de dérivation 28 est à commande manuelle et ne nécessite pas d'alimentation électrique pour son fonctionnement. Elle comprend un deuxième organe de manœuvre 29 dont l'actionnement manuel par un opérateur permet de fermer la deuxième vanne de dérivation 28 pour empêcher la circulation de fluide dans le deuxième conduit de dérivation 26 ou d'ouvrir la deuxième vanne de dérivation 28 pour permettre la circulation de fluide dans le deuxième conduit de dérivation 26.

Le deuxième circuit 10 comprend au moins une deuxième branche d'alimentation 30 alimentée par le deuxième conduit d'alimentation 22, chaque deuxième branche 30 étant reliée à la deuxième entrée 4B d'une pile à combustible 4 respective pour alimenter la pile à combustible.

Le deuxième circuit 10 comprend autant de deuxièmes branches d'alimentation 30 que le système à pile à combustible 2 comprend de piles à combustible 4. Les deuxièmes entrées 4B des piles à combustible 4 sont alimentées en parallèle par le deuxième circuit 10.

Le deuxième conduit de dérivation 26 s'alimente dans le deuxième conduit d'alimentation 22 en un deuxième point d'alimentation 26A en amont de la deuxième électrovanne 24 et débouche dans le deuxième conduit d'alimentation 22 en un deuxième point de retour 26B en aval de la deuxième électrovanne 24 et en amont de l'embranchement des deuxièmes branches d'alimentation 30 sur le deuxième conduit d'alimentation 22.

Le premier conduit d'alimentation 12 s'alimente dans une première source 32 et le deuxième conduit d'alimentation 22 s'alimente dans une deuxième source 34. L'une parmi la première source 32 et la deuxième source 34 est une source de dihydrogène et l'autre est une source de dioxygène, ou en variante une source d'air.

Le dispositif d'alimentation 6 comprend un détendeur à pilotage par pression 36 disposé sur le premier conduit de dérivation 16 et piloté par la pression dans le deuxième conduit d'alimentation 22.

Un détendeur à pilotage par pression détend le gaz (abaisse la pression) dans la canalisation sur laquelle il est disposé, en utilisant comme référence de pression une pression de pilotage prise dans une autre canalisation. Le détendeur à pilotage par pression est piloté en boucle ouverte.

Le détendeur à pilotage par pression 36 est piloté par la pression prise dans le deuxième conduit d'alimentation 22 en aval du point de retour du deuxième conduit de dérivation 26 dans le deuxième conduit d'alimentation 22 et en amont de l'embranchement des deuxièmes branches 8 d'alimentation 30 sur le deuxième conduit d'alimentation 22.

Le détendeur à pilotage par pression 36 comprend un piquage de pression 37 prenant la pression de pilotage dans le deuxième conduit d'alimentation en aval 22 du point de retour du deuxième conduit de dérivation 26 dans le deuxième conduit d'alimentation 22 et en amont de l'embranchement 30A des deuxièmes branches d'alimentation 30 sur le deuxième conduit d'alimentation 22.

Le dispositif d'alimentation 6 comprend un détendeur commandé 38 disposé sur le deuxième conduit de dérivation 26 en aval de la deuxième vanne de dérivation 28.

Un détendeur commandé détend le gaz dans la canalisation sur laquelle il est disposé, en fonction d'une consigne donnée par exemple par la pression ambiante ou une valeur de pression de réglage déterminée par la position d'un organe de réglage commandé. Le détendeur commandé est à commande électrique et/ou manuelle, indépendamment de la pression dans une autre canalisation.

Le premier circuit 8 comprend un premier régulateur de pression à commande électrique 40 disposé sur le premier conduit d'alimentation et associé à un premier capteur de pression 42 disposé sur la première ligne d'alimentation.

Un régulateur de pression à commande électrique régule la pression du gaz dans la canalisation sur laquelle il est disposé, en fonction du signal de mesure de pression fournie par le capteur de pression associé, par actionnement d'un organe de régulation de pression à l'aide d'un actionneur électrique. Le capteur de pression est disposé de préférence sur la canalisation pour une régulation en boucle fermée.

Le premier régulateur de pression à commande électrique 40 est disposé sur le premier conduit d'alimentation 12 entre le point d'alimentation et le point de retour du premier conduit de dérivation 16. Le premier régulateur de pression à commande électrique 40 est disposé en aval de la première électrovanne 14.

Le premier capteur de pression 42 est disposé sur le premier conduit d'alimentation 12 en aval du point de retour du premier conduit de dérivation 16 et en amont de l'embranchement 20A des premières branches d'alimentation 20 sur le premier conduit d'alimentation 12.

Le deuxième circuit 10 comprend un deuxième régulateur de pression à commande électrique 44 disposé sur le deuxième conduit d'alimentation 22 et associé à un deuxième capteur de pression 46 disposé sur le deuxième conduit d'alimentation.

Le deuxième régulateur de pression à commande électrique 44 est disposé sur le deuxième conduit d'alimentation 22 entre le point d'alimentation et le point de retour du deuxième conduit de dérivation 26. Le deuxième régulateur de pression à commande électrique 44 est disposé en aval de la deuxième électrovanne 24.

Le deuxième capteur de pression 46 est disposé sur le deuxième conduit d'alimentation 22 en aval du point de retour du deuxième conduit de dérivation 26 et en amont du point d'embranchement 30A des deuxièmes branches d'alimentation 30.

Le système à pile à combustible 2 comprend un dispositif de délivrance d'électricité 50 pour délivrer l'électricité produite par les piles à combustible, par exemple à une installation électrique, un appareil électrique ou un réseau électrique.

Le dispositif de délivrance 50 comprend un convertisseur de puissance 52 relié électriquement aux bornes électriques des piles à combustible 4 par l'intermédiaire d'un contacteur de sortie 54, éventuellement par l'intermédiaire d'un premier convertisseur électrique (non représenté).

Le système à pile à combustible 2 comprend un dispositif de commande 56 pour commander les actionneurs électriques et électromécaniques du système à pile à combustible 2, dont les électrovannes, les détendeurs commandés lorsqu'ils sont à commande électrique et les régulateurs de pression à commande électrique.

Le dispositif de commande comprend un réseau de commande 58, relié électriquement aux bornes électriques des piles à combustible par l'intermédiaire d'un convertisseur 60 électrique, le convertisseur 60 étant lui-même relié aux piles à combustibles 4 par l'intermédiaire d'un interrupteur 62 à commande manuelle et d'un commutateur 64 à commande électrique agencés en parallèle entre le convertisseur 60 et les piles à combustibles 4.

Le dispositif de commande 56 comprend une unité de commande 66 s'alimentant en énergie électrique sur le réseau de commande 58, un contacteur de démarrage 68 par l'intermédiaire duquel les actionneurs de démarrage s'alimentent sur le réseau de commande 58, un contacteur d'arrêt 70 par l'intermédiaire duquel les actionneurs d'arrêt s'alimentent sur le réseau de commande 58 et un contacteur additionnel 72 par l'intermédiaire duquel des actionneurs additionnel s'alimentent sur le réseau de commande 58.

Les actionneurs de démarrage sont nécessaires au démarrage de la pile à combustible dans la phase initiale de démarrage. Les actionneurs d'arrêt sont nécessaires à l'arrêt des piles à combustibles 4. Les actionneurs additionnels ne sont pas impliqués directement dans le démarrage ou l'arrêt du système à pile à combustible 2.

L'unité de commande 66 est configurée pour commander les différents commutateurs et les différents actionneurs, incluant les détendeurs commandés à commande électrique, les régulateurs de pression à commande électrique et les vannes à commande électrique, en particulier la première électrovanne 14 et la deuxième électrovanne 24.

En fonctionnement, les piles à combustible 4 sont initialement arrêtées. La première électrovanne 14 et la deuxième électrovanne 24 sont fermées et inopérante du fait de l'absence d'alimentation électrique à partir des piles à combustible 4. L'interrupteur 62 est ouvert ou fermé.

Pour démarrer les piles à combustible 4, la première vanne de dérivation 18 et la deuxième vanne de dérivation 28 sont ouvertes, de préférence de manière simultanée. Du fait de la différence de pression, plus élevée du côté de la première source 32 et de la deuxième source 34 que du côté des piles à combustible 4, le combustible et le comburant circulent des sources vers les piles à combustible 4 en passant par le premier conduit de dérivation 16 et le deuxième conduit de dérivation 26. Le combustible et le comburant entrent dans les piles à combustible 4. La réaction d'oxydoréduction démarre dans les piles à combustible 4 qui commencent à générer de l'électricité.

Si l'interrupteur 62 est ouvert, il est alors fermé manuellement, sinon, il est maintenu fermé. Dès que l'unité de commande 66 est alimentée en énergie électrique et que l'alimentation électrique est suffisante sur le réseau de commande 58, elle commande la fermeture au moins du contacteur de démarrage 68, de manière à alimenter en énergie électrique les actionneurs nécessaires au démarrage des piles à combustible. Le contacteur de démarrage 68 permet d'alimenter notamment la première électrovanne 14, la deuxième électrovanne 24, les régulateurs de pression à commande électrique 40, 44 et les capteurs de pression associés 42, 46.

Ensuite, l'unité de commande 66 commande la fermeture du contacteur d'arrêt 70 et du contacteur additionnel 72 pour l'alimentation de l'ensemble des actionneurs du système à pile à combustible 2 à l'aide de l'énergie électrique produite par les piles à combustibles 4 et pour le fonctionnement normal du système à pile à combustible 2.

De préférence, l'unité de commande 66 est alimentée par fermeture manuelle de l'interrupteur 62. Dès que l'unité de commande 66 est alimentée en énergie électrique et détermine que l'alimentation électrique est suffisante sur le réseau de commande 58, elle commande la fermeture de contacteur 64 disposé en parallèle. Un opérateur ouvre alors manuellement l'interrupteur 62. Les vannes de dérivation 18 et 28 peuvent alors être fermées, le combustible et le comburant passant directement par les électrovannes 14 et 24.

L'alimentation des actionneurs du système à pile à combustible 2, et en particulier celui des électrovannes, des détendeurs commandés à commande électrique et des régulateurs de pression à commande électrique, assure une autonomie de fonctionnement du système à pile à combustible 2 pour son alimentation électrique.

Le premier circuit et le deuxième circuit permettent une alimentation contrôlée des piles à combustible en combustible et en comburant, avec un démarrage fiable et sûr.

Dans la suite de la description, les références numériques aux éléments semblables à ceux de la figure 1 sont conservées.

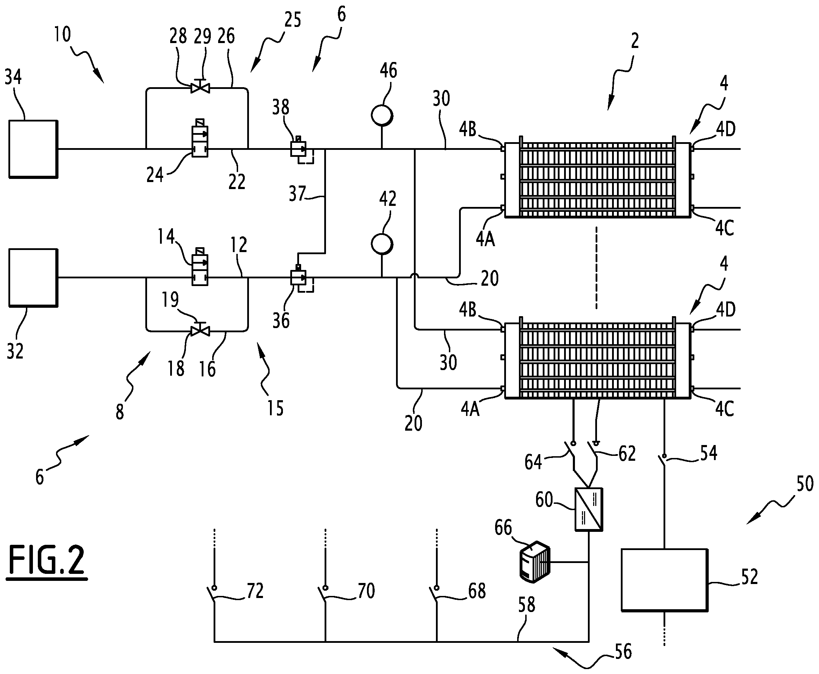

Le système à pile à combustible 2 de la figure 2 diffère de celui de la figure 1 en ce que le détendeur commandé 38 du deuxième circuit 10 est disposé sur le deuxième conduit d'alimentation 22 en aval du point de retour du deuxième conduit de dérivation 26 et en amont des deuxièmes branches d'alimentation 30.

Le détendeur piloté par pression 36 du premier circuit 8 est disposé sur le premier conduit d'alimentation 12 en aval du point de retour du premier conduit de dérivation 16 et en amont des premières branches d'alimentation 20.

Le piquage de pression 37 est disposé sur le deuxième conduit d'alimentation 22 en aval du détendeur commandé 38 et en amont des deuxièmes branches d'alimentation 30.

Le premier circuit 8 comprend un premier capteur de pression 42 disposé entre le détendeur à pilotage par pression et les premières branches. Le deuxième circuit est muni d'un deuxième capteur de pression 46 disposé entre le piquage de pression de pilotage et les deuxièmes branches. Le premier circuit d'alimentation et le deuxième circuit d'alimentation sont en outre démunis de régulateur de pression à commande électrique.

Le premier conduit de dérivation 16 et le deuxième conduit de dérivation 26 sont dépourvus de détendeur. Seule la première vanne de dérivation 18 est disposée sur le premier conduit de dérivation 16, et seule la deuxième vanne de dérivation 28 est disposée sur la deuxième conduit de dérivation 26.

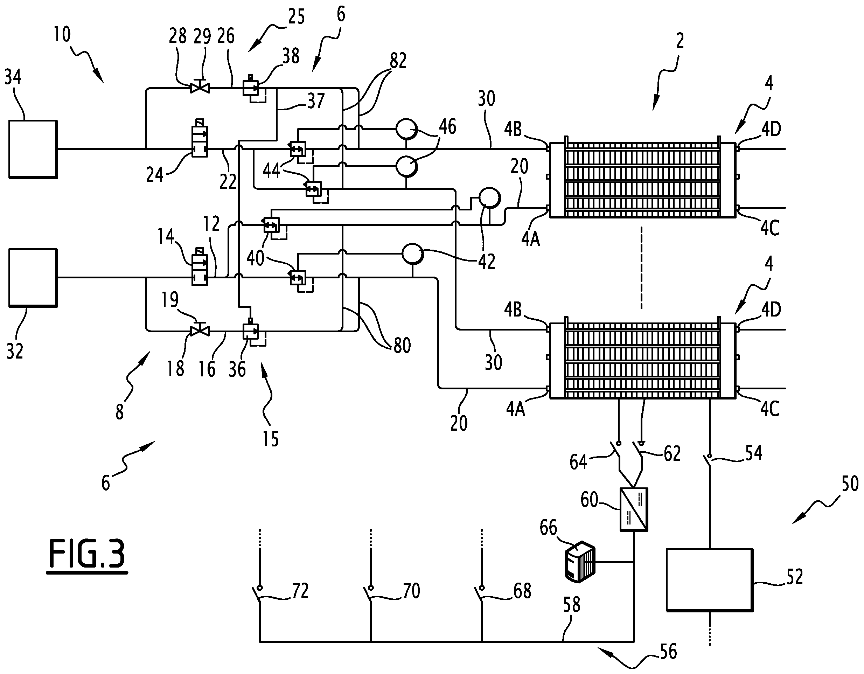

Dans le système à pile à combustible 2 de la figure 3, le premier dispositif de démarrage 15 comprend une pluralité de premières branches de dérivation 80 s'alimentant dans le premier conduit de dérivation 16, chaque première branche de dérivation 80 débouchant dans une première branche d'alimentation 20 respective.

Le deuxième dispositif de démarrage 25 comprend une pluralité de deuxièmes branches de dérivation 82 s'alimentant dans le deuxième conduit de dérivation 26, chaque deuxième branche de dérivation 82 débouchant dans une deuxième branche d'alimentation 30 respective.

Le détendeur piloté par pression 36 est disposé sur le premier conduit de dérivation 16 en aval de la première vanne de dérivation 18 et est piloté par une pression prise dans le deuxième conduit de dérivation 26 en amont des deuxièmes branches de dérivation 82. Le détendeur commandé 38 est disposé sur le deuxième conduit de dérivation 26 en aval de la deuxième vanne de dérivation 26. Le piquage de pression de pilotage est disposé en aval du détendeur commandé 38 et en amont des deuxièmes branches de dérivation 82.

Le premier circuit 8 comprend sur chaque première branche d'alimentation un premier régulateur de pression à commande électrique 40 disposé en amont du point de retour de la première branche de dérivation 80 associée, et associé à un premier capteur de pression 42 respectif, disposé sur la première branche d'alimentation 20 en aval du point de retour de la première branche de dérivation 80 associée.

De manière analogue, le deuxième circuit 10 comprend sur chaque deuxième branche d'alimentation 30 un deuxième régulateur de pression à commande électrique 44 disposé en amont du point de retour de la deuxième branche de dérivation 82 associée, et associé à un deuxième capteur de pression 46 respectif, disposé sur la deuxième branche d'alimentation 30 en aval du point de retour de la deuxième branche de dérivation 82 associée.

Dans cette variante, le détendeur commandé 38 et le détendeur piloté 36 adaptent la pression dans les conduits de dérivation communs aux piles à combustible, en amont de branches de dérivation dédiées. Chaque branche d'alimentation comprend un régulateur de pression pour réguler individuellement la pression de combustible ou de comburant délivré à chaque pile à combustible.

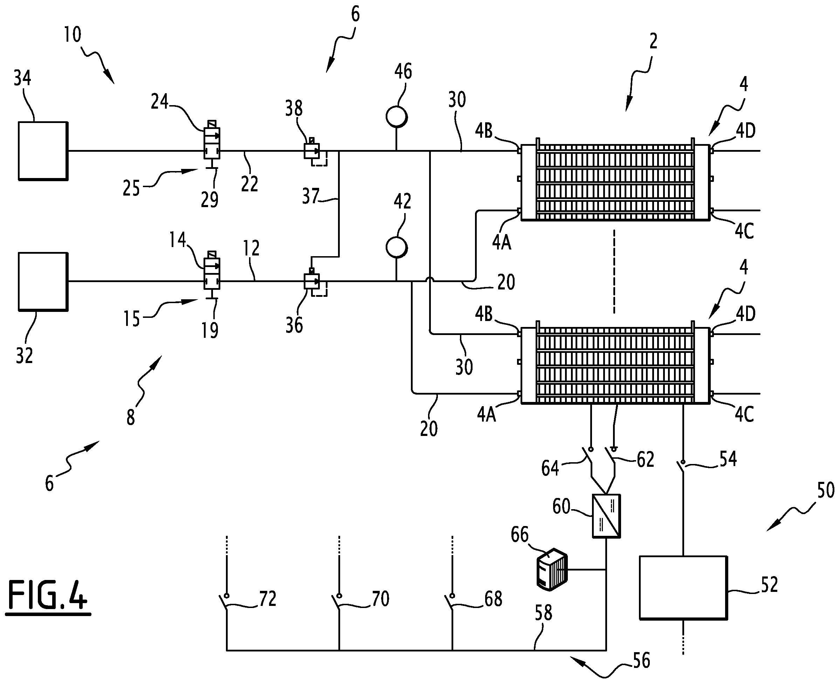

Le système à pile à combustible de la figure 4 diffère de celui de la Figure 2 en ce qu'il est dépourvu de premier conduit de dérivation muni d'une première vanne de dérivation et de deuxième conduit de dérivation muni d'une deuxième vanne de dérivation.

La première électrovanne 14 est munie d'un premier organe de manœuvre 19 actionnable manuellement de manière à ouvrir la première électrovanne 14 lorsque la commande électrique de la première électrovanne 14 est inopérante. Le premier organe de manœuvre 19 à commande manuelle forme le premier dispositif de démarrage 15.

De même, la deuxième électrovanne 24 est munie d'un organe de manœuvre 29 actionnable manuellement de manière à ouvrir la deuxième électrovanne 24 lorsque la commande électrique de la première électrovanne 24 est inopérante. Le deuxième organe de manœuvre 29 à commande manuelle forme le deuxième dispositif de démarrage 25.

D'autres variantes sont envisageables.

Dans une variante du système à pile à combustible de la figure 1, seul le premier régulateur de pression 40 commun aux piles à combustible est remplacé par un premier régulateur de pression dédié respectif pour chaque pile à combustible, chaque premier régulateur de pression 40 étant disposé sur une première branche d'alimentation respective et associé chacun à un capteur de pression 42, comme c'est le cas par exemple dans la variante de la figure 3.

Dans une variante du système à pile à combustible de la figure 1, seul le deuxième régulateur de pression 44 commun aux piles à combustible est remplacé par un deuxième régulateur de pression dédié respectif pour chaque pile à combustible, chaque deuxième régulateur de pression 44 étant disposé sur une deuxième branche d'alimentation respective et associé chacun à un capteur de pression 46, comme c'est le cas par exemple dans la variante de la figure 3.

Dans une variante du système à pile à combustible de la figure 2 ou 4, et sur le même principe que sur la figure 3, le premier détendeur de pression 36 commun aux piles à combustible est remplacé par un premier détendeur de pression dédié respectif pour chaque pile à combustible, chaque premier détendeur de pression 36 étant disposé sur une première branche d'alimentation respective et associé chacun à un capteur de pression 42, comme c'est le cas par exemple dans la variante de la figure 3. En option ou en variante, le deuxième détendeur de pression 38 commun aux piles à combustible 4 est remplacé par un deuxième détendeur de pression dédié respectif pour chaque pile à combustible, chaque deuxième détendeur de pression 38 étant disposé sur une première branche d'alimentation respective et associé chacun à un capteur de pression 46, comme c'est le cas par exemple dans la variante de la figure 3.

Dans les différentes variantes mentionnées auparavant, la première vanne de dérivation et la deuxième vanne de dérivation sont à commande manuelle, ce qui permet un démarrage manuel de la pile à combustible en l'absence de toute alimentation électriques, par exemple fournie par un dispositif de stockage d'énergie électrique.

En option, pour permettre une commande simultanée, la première vanne de dérivation et la deuxième vanne de dérivation sont reliées par un mécanisme de synchronisation.

Par ailleurs, dans les différentes variantes, il est possible de relier le réseau de commande directement aux piles à combustible sans prévoir un interrupteur et un contacteur comme illustré sur les figures 1 à 4. Dans un tel cas, l'unité de commande est alimentée en énergie électrique et commande la fermeture ou l'ouverture des contacteurs de démarrage, d'arrêt et/ou additionnel dès que l'énergie électrique fournie par les piles à combustible est suffisante.

Les différentes variantes ont été décrites pour un système à pile à combustible comprenant plusieurs piles à combustible alimentée en parallèle par le dispositif d'alimentation.

En variante, le système à pile à combustible comprend une seule pile à combustible, le dispositif d'alimentation étant adapté en conséquence, et dans ce cas le premier circuit et le deuxième circuit comprennent chacun une seule branche d'alimentation.

## Revendications

1. Dispositif d'alimentation pour au moins une pile à combustible (4), comprenant un premier circuit (8) fluidique et un deuxième circuit (10) fluidique, l'un pour l'alimentation en combustible de la ou chaque pile à combustible et l'autre pour l'alimentation en comburant de la ou chaque pile à combustible,
dans lequel le premier circuit (8) comprend un premier conduit d'alimentation (12) muni d'une première électrovanne (14) à commande électrique et alimentant au moins une première branche d'alimentation (20), chaque première branche d'alimentation (20) alimentant une pile à combustible (4) respective, et un premier dispositif de démarrage (15) configuré pour permettre la circulation de fluide dans le premier circuit (8) vers la ou chaque pile à combustible (4) lorsque la commande électrique de la première électrovanne (14) est inopérante,
dans lequel le deuxième circuit (10) comprend un deuxième conduit d'alimentation (22) muni d'une deuxième électrovanne (24) à commande électrique et alimentant au moins une deuxième branche d'alimentation (30), chaque deuxième branche d'alimentation (30) alimentant une pile à combustible (4) respective, et un deuxième dispositif de démarrage (25) configuré pour permettre la circulation de fluide dans le deuxième circuit (10) vers la ou chaque pile à combustible (4) lorsque la commande électrique de la deuxième électrovanne (24) est inopérante,
ledit dispositif comprenant en outre au moins un détendeur à pilotage par pression disposé sur le premier circuit (8) et piloté par une pression dans le deuxième circuit (10),
**caractérisé en ce que** la première électrovanne (14) et la deuxième électrovanne (24) sont munies respectivement d'un premier organe de manœuvre (19) formant le premier dispositif de démarrage et d'un deuxième organe de manœuvre (29) formant le deuxième dispositif de démarrage, la première électrovanne (14) et la deuxième électrovanne (24) étant manœuvrables manuellement respectivement à l'aide du premier organe de manœuvre (19) et du deuxième organe de manœuvre (29), ou
le premier dispositif de démarrage (15) et le deuxième dispositif de démarrage (25) comprennent respectivement un premier conduit de dérivation (16) de dérivation de la première électrovanne (14) muni d'une première vanne de dérivation (18) et un deuxième conduit de dérivation (26) de dérivation de la deuxième électrovanne (24) et muni d'une deuxième vanne de dérivation (28), la première vanne de dérivation (18) et la deuxième vanne de dérivation (28) étant à commande manuelle.

2. Dispositif d'alimentation selon la revendication 1, comprenant un détendeur piloté par pression disposé sur le premier conduit d'alimentation et piloté par une pression de pilotage prise dans le deuxième conduit d'alimentation.

3. Dispositif d'alimentation selon la revendication 1, comprenant un détendeur piloté par pression (36) disposé sur le premier conduit de dérivation (16) et piloté par une pression de pilotage prise dans le deuxième conduit d'alimentation (22).

4. Dispositif d'alimentation selon la revendication 1, comprenant un détendeur piloté par pression disposé sur le premier conduit de dérivation et piloté par une pression de pilotage prise dans le deuxième conduit de dérivation.

5. Dispositif d'alimentation selon la revendication 1, dans lequel le premier conduit d'alimentation (12) alimente plusieurs premières branches d'alimentation (20) et le premier conduit de dérivation (16) alimente plusieurs premières branches de dérivation (80), chaque première branche de dérivation (80) débouchant dans une première branche d'alimentation (20) respective, dans lequel le deuxième conduit d'alimentation (22) alimente plusieurs deuxièmes branches d'alimentation (30) et le deuxième conduit de dérivation alimente plusieurs deuxièmes branches de dérivation (82), chaque deuxième branche de dérivation (82) débouchant dans une deuxième branche d'alimentation (30) respective, le dispositif d'alimentation comprenant un détendeur piloté par pression disposé sur une première branche de dérivation et piloté par une pression de pilotage prise dans une deuxième branche de dérivation, la première branche de dérivation et la deuxième branche de dérivation alimentant de préférence la même pile à combustible.

6. Dispositif d'alimentation selon l'une quelconque des revendications 1 à 5, comprenant un détendeur piloté par pression disposé sur une première branche d'alimentation et piloté par une pression de pilotage prise dans une deuxième branche d'alimentation, la première branche d'alimentation et la deuxième branche d'alimentation alimentant de préférence la même pile à combustible.

7. Dispositif d'alimentation selon l'une quelconque des revendications 1 à 6, comprenant un détendeur commandé disposé sur le deuxième conduit d'alimentation ou sur une deuxième branche d'alimentation (30).

8. Dispositif d'alimentation selon l'une quelconque des revendications 1 à 7 dépendante de la revendication 5, comprenant un détendeur commandé (38) disposé sur le deuxième conduit de dérivation (26).

9. Dispositif d'alimentation selon l'une quelconque des revendications 1 à 8, comprenant un régulateur de pression à commande électrique (40) disposé sur le premier conduit d'alimentation ou sur chaque première branche d'alimentation (20).

10. Dispositif d'alimentation selon l'une quelconque des revendications 1 à 9, comprenant un régulateur de pression à commande électrique (42) disposé sur le deuxième conduit d'alimentation ou sur chaque deuxième branche d'alimentation (30).

11. Système à pile à combustible comprenant au moins une pile à combustible et un dispositif d'alimentation de la ou chaque pile en combustible en combustible et en comburant selon l'une quelconque des revendications précédentes.

## Patentansprüche

1. Versorgungsvorrichtung für wenigstens eine Brennstoffzelle (4), aufweisend
einen ersten Fluid-Kreis (8) und einen zweiten Fluid-Kreis (10), wobei der eine für die Brennstoffversorgung der oder jeder Brennstoffzelle ist und der andere für die Sauerstoffträgerversorgung der oder jeder Brennstoffzelle ist, wobei der erste Kreis (8) aufweist eine erste Versorgungsleitung (12), die mit einem ersten elektrisch steuerbaren Magnetventil (14) ausgestattet ist und die wenigstens einen ersten Versorgungszweig (20) versorgt, wobei jeder erste Versorgungszweig (20) eine jeweilige Brennstoffzelle (4) versorgt, und eine erste Anlaufvorrichtung (15), die konfiguriert ist zum Ermöglichen der Zirkulation von Fluid in dem ersten Kreis (8) zu der oder jeder Brennstoffzelle (4) hin, wenn die elektrische Steuerung des ersten Magnetventils (14) nicht arbeitet,
wobei der zweite Kreis (10) aufweist eine zweite Versorgungsleitung (22), die mit einem zweiten elektrisch steuerbaren Magnetventil (24) ausgestattet ist und die wenigstens einen zweiten Versorgungszweig (30) versorgt, wobei jeder zweite Versorgungszweig (30) eine jeweilige Brennstoffzelle (4) versorgt, und eine zweite Anlaufvorrichtung (25), die konfiguriert ist zum Ermöglichen der Zirkulation von Fluid in dem zweiten Kreis (10) zu der oder jeder Brennstoffzelle (4) hin, wenn die elektrische Steuerung des zweiten Elektromagnets (24) nicht arbeitet, wobei die Vorrichtung ferner aufweist wenigstens einen druckgesteuerten Druckregler, der im ersten Kreis (8) angeordnet ist und von einem Druck im zweiten Kreis (10) gesteuert ist,
**dadurch gekennzeichnet, dass** das erste Magnetventil (14) und das zweite Magnetventil (24) jeweilig mit einem ersten Betätigungsorgan (19), das die erste Anlaufvorrichtung bildet, und einem zweiten Betätigungsorgan (29), das die zweite Anlaufvorrichtung bildet, ausgestattet sind, wobei das erste Magnetventil (14) und das zweite Magnetventil (24) manuell betätigbar sind jeweilig mittels des ersten Betätigungsorgans (19) und des zweiten Betätigungsorgans (29), oder
die erste Anlaufvorrichtung (15) und die zweite Anlaufvorrichtung (25) jeweilig eine erste Abzweigleitung (16) zur Umgehung des ersten Magnetventils (14), die mit einem ersten Abzweigventil (18) ausgestattet ist, und eine zweite Abzweigleitung (26) zur Umgehung des zweiten Magnetventils (24), die mit einem zweiten Abzweigventil (28) ausgestattet ist, aufweisen, wobei das erste Abzweigventil (18) und das zweite Abzweigventil (28) manuell gesteuert sind.

2. Versorgungsvorrichtung gemäß Anspruch 1, aufweisend einen druckgesteuerten Druckregler, der in der ersten Versorgungsleitung angeordnet ist und von einem Steuerdruck gesteuert ist, der in der zweiten Versorgungsleitung vorliegt.

3. Versorgungsvorrichtung gemäß Anspruch 1, aufweisend einen druckgesteuerten Druckregler (36), der in der ersten Abzweigleitung (16) angeordnet ist und von einem Steuerdruck gesteuert ist, der in der zweiten Versorgungsleitung (22) vorliegt.

4. Versorgungsvorrichtung gemäß Anspruch 1, aufweisend einen druckgesteuerten Druckregler, der in der ersten Abzweigleitung angeordnet ist und von einem Steuerdruck gesteuert ist, der in der zweiten Abzweigleitung vorliegt.

5. Versorgungsvorrichtung gemäß Anspruch 1, wobei die erste Versorgungsleitung (12) mehrere erste Versorgungszweige (20) versorgt und die erste Abzweigleitung (16) mehrere erste Umgehungszweige (80) versorgt, wobei jeder erste Umgehungszweig (80) in einen jeweiligen ersten Versorgungszweig (20) mündet, wobei die zweite Versorgungsleitung (22) mehrere zweite Versorgungszweige (30) versorgt und die zweite Abzweigleitung mehrere zweite Umgehungszweige (82) versorgt, wobei jeder zweite Umgehungszweig (82) in einen jeweiligen zweiten Versorgungszweig (30) mündet, wobei die Versorgungsvorrichtung aufweist einen druckgesteuerten Druckregler, der in einem ersten Umgehungszweig angeordnet ist und von einem Steuerdruck gesteuert ist, der in einem zweiten Umgehungszweig vorliegt, wobei der erste Umgehungszweig und der zweite Umgehungszweig bevorzugt dieselbe Brennstoffzelle versorgen.

6. Versorgungsvorrichtung gemäß irgendeinem der Ansprüche 1 bis 5, aufweisend einen druckgesteuerten Druckregler, der in einem ersten Versorgungszweig angeordnet ist und von einem Steuerdruck gesteuert ist, der in einem zweiten Versorgungszweig vorliegt, wobei der erste Versorgungszweig und der zweite Versorgungszweig bevorzugt dieselbe Brennstoffzelle versorgen.

7. Versorgungsvorrichtung gemäß irgendeinem der Ansprüche 1 bis 6, aufweisend einen gesteuerten Druckregler, der in der zweiten Versorgungsleitung oder im zweiten Versorgungszweig (30) angeordnet ist.

8. Versorgungsvorrichtung gemäß irgendeinem der Ansprüche 1 bis 7 abhängig von Anspruch 5, aufweisend einen gesteuerten Druckregler (38), der in der zweiten Abzweigleitung (26) angeordnet ist.

9. Versorgungsvorrichtung gemäß irgendeinem der Ansprüche 1 bis 8, aufweisend einen elektrisch gesteuerten Druckregler (40), der in der ersten Versorgungsleitung oder in jedem ersten Versorgungszweig (20) angeordnet ist.

10. Versorgungsvorrichtung gemäß irgendeinem der Ansprüche 1 bis 9, aufweisend einen elektrisch gesteuerten Druckregler (42), der in der zweiten Versorgungsleitung oder in jedem zweiten Versorgungszweig (30) angeordnet ist.

11. Brennstoffzellen-System mit wenigstens einer Brennstoffzelle und einer Vorrichtung zur Versorgung der oder jeder Brennstoffzelle mit einem Brennstoff und einem Sauerstoffträger gemäß irgendeinem der vorhergehenden Ansprüche.

## Claims

1. Supply device for at least one fuel cell (4), comprising a first fluid circuit (8) and a second fluid circuit (10), one to supply the/each fuel cell with fuel and the other to supply the/each fuel cell with combustion agent,
whereby the first circuit (8) comprises a first supply line (12) having a first electrically controlled solenoid valve (14) that supplies at least one first supply branch (20), whereby each first supply branch (20) supplies one respective fuel cell (4), and a first starter (15) configured to allow for the circulation of fluid in the first circuit (8) towards the/each fuel cell (4) when the electrical control of the first solenoid valve (14) is inoperative,
whereby the second circuit (10) comprises a second supply line (22) having a second electrically controlled solenoid valve (24) that supplies at least one second supply branch (30), whereby each second supply branch (30) supplies one respective fuel cell (4), and a second starter (25) configured to allow for the circulation of fluid in the second circuit (10) towards the/each fuel cell (4) when the electrical control of the second solenoid valve (24) is inoperative,
said device further comprising at least one pressure-actuated pressure reducer arranged on the first circuit (8) and actuated by a pressure in the second circuit (10),
**characterized in that** the first solenoid valve (14) and the second solenoid valve (24) have respectively a first actuation member (19) constituting the first starter and a second actuation member (29) constituting the second starter, whereby the first solenoid valve (14) and the second solenoid valve (24) can be controlled manually using respectively the first actuation member (19) and the second actuation member (29), or
the first starter (15) and the second starter (25) respectively comprise a first bypass line (16) for the first solenoid valve (14) having a first bypass valve (18) and a second bypass line (26) for the second solenoid valve (24) having a second bypass valve (28), the first bypass valve (18) and the second bypass valve (28) being manually actuatable.

2. Supply device according to claim 1, comprising a pressure-actuated pressure reducer arranged on the first supply line and actuated by a control pressure obtained in the second supply line.

3. Supply device according to claim 1, comprising a pressure-actuated pressure reducer (36) arranged on the first bypass line (16) and actuated by a control pressure obtained in the second supply line (22).

4. Supply device according to claim 1, comprising a pressure-actuated pressure reducer arranged on the first bypass line and actuated by a control pressure obtained in the second by-pass line.

5. Supply device according to claim 1, whereby the first supply line (12) supplies several first supply branches (20) and the first bypass line (16) supplies several first bypass branches (80), whereby each bypass branch (80) opens into a respective first supply line (20), whereby the second supply line (22) supplies several second supply branches (30) and the second bypass line (16) supplies several second bypass branches (82), whereby each second bypass branch (82) opens into a respective second supply line (30), whereby the supply device comprises a pressure-actuated pressure reducer arranged on a first bypass branch and actuated by a control pressure obtained in a second bypass branch, whereby the first bypass branch and the second bypass branch preferably supply the same fuel cell.

6. Supply device according to any of claims 1 to 5, comprising a pressure-actuated pressure reducer arranged on a first supply branch and actuated by a control pressure obtained in a second supply branch, whereby the first supply branch and the second supply branch preferably supply the same fuel cell.

7. Supply device according to any of claims 1 to 6, comprising a controlled pressure reducer arranged on the second supply line or on a second supply branch (30).

8. Supply device according to any of the claims 1 to 7, comprising a controlled pressure reducer (38) arranged on the second bypass line (26).

9. Supply device according to any of the claims 1 to 8, comprising an electrically controlled pressure regulator (40) arranged on the first supply line or on each first supply branch (20).

10. Supply device according to any of the claims 1 to 9, comprising an electrically controlled pressure regulator (42) arranged on the second supply line or on each second supply branch (30).

11. Fuel cell system comprising at least one fuel cell and a device for supplying the/each fuel cell with fuel and combustion agent according to any of the foregoing claims.
